# EUROPEAN PATENT SPECIFICATION

(11) **EP 3 300 085 B1**
(45) Date of publication and mention of the grant of the patent: **31.03.2021**
(21) Application number: 16796466.7
(22) Date of filing: 16.05.2016
(51) Int. Cl.: B32B 27/00, H01B 7/08, B32B 27/36, C09D 5/00, C09D 167/00, C09D 175/04, C09J 167/00, B32B 27/08, B32B 27/30, B32B 27/32, B32B 27/34, B32B 3/26

(54) **REINFORCING TAPE AND FLEXIBLE FLAT CABLE USING SAME**
VERSTÄRKUNGSBAND UND FLEXIBLES FLACHKABEL DAMIT
BANDE DE RENFORCEMENT ET CÂBLE PLAT FLEXIBLE L'UTILISANT

(30) Priority: 20.05.2015 JP 2015102784
(43) Date of publication of application: 28.03.2018
(73) Proprietor: Riken Technos Corporation, Tokyo 101-8336 (JP)
(72) Inventor: TAGUCHI Hiroshi, Tokyo 101-8336 (JP)
(74) Representative: Müller-Boré & Partner Patentanwälte PartG mbB
(86) International application number: PCT/JP2016/064455
(87) International publication number: WO 2016/186073

(56) References cited:
- EP-A1- 2 610 879
- WO-A1-2009/008481
- JP-A- H 117 838
- JP-A- S62 167 383
- JP-A- 2001 222 919
- JP-A- 2010 061 885
- US-A1- 2014 158 398

## Description

### [Technical Field]

The present invention relates to a reinforcing tape for flexible flat cables. More specifically, the present invention relates to a reinforcing tape which has an excellent conductor-adhesive property and can prevent troubles such as a peeling from a conductor when terminals of the conductor are processed by gold plating or the like.

### [Background Art]

A flexible flat cable has a structure in which a plurality of conductors are arranged so as to be sandwiched and covered with, for example, a laminated body having an insulating base material film and an adhesive resin composition layer. The above conductors have terminals, to which a reinforcing tape is often attached for reinforcement, thereby making it possible to join the cable by a connector to an electronic device. In addition, the terminals of the conductors, to which a reinforcing tape has been attached, are often gold-plated in order to improve properties of the cable.

A reinforcing tape obtained by providing a hot-melt adhesive layer on one face of a thick insulating film, which is typically obtained by providing a polyester-based hot-melt adhesive layer on one face of a biaxially oriented polyethylene terephthalate film having a thickness of about 150 to 250 µm, has been used as a conventional reinforcing tape. However, conventional reinforcing tapes are problematic in that the conductor-adhesion force decreases over time and wet heat resistance is low. As a technique for solving these problems, the use of a modified polyester-based hot-melt adhesive layer as a hot-melt adhesive has been proposed (e.g., Patent Documents 1 and 2). Nevertheless, it was impossible to prevent troubles such as a peeling of a reinforcing tape from a conductor even by applying these hot-melt adhesives to the reinforcing tape when gold-plating terminals of the conductor.

### [Prior Art Document]

### [Patent Document]

[Patent Document 1]: Japanese Patent Application Laid-Open Publication No. 2002-371258
[Patent Document 2]: Japanese Patent Application Laid-Open Publication No. 2005-255752

US 2014/158398 A1, EP 2 610 879 A1 and WO 2009/008481 A1 disclose tapes for reinforcing a flexible flat cable, comprising an insulating film, a layer of an anchor coat, and a layer of a hot-melt adhesive.

### SUMMARY OF THE INVENTION

### [Problems to be Solved by the Invention]

An object of the present invention is to provide a reinforcing tape which has an excellent conductor-adhesive property and can prevent troubles such as a peeling from a conductor when terminals of the conductor are processed by gold plating or the like, and a flexible flat cable using the same.

### [Means for Solving the Problems]

As a result of intensive studies, the present inventors surprisingly found that the object can be achieved by providing a thick anchor coat layer between a thick insulating film and a hot-melt adhesive layer.

According to the present invention, such object is achieved by a flexible flat cable reinforcing tape having the characteristics of claim 1. The invention also concerns a method for reinforcing terminals of a conductor of a flexible flat cable, as defined in claim 12. Further, preferred embodiments are covered by the dependent claims.

### [Effect of the Invention]

The reinforcing tape according to the present invention has an excellent conductor-adhesive property and can be prevented from peeling from a conductor when terminals of the conductor are processed by gold plating or the like. Therefore, the reinforcing tape of the present invention can be preferably used for reinforcing conductor terminals of flexible flat cables.

### BRIEF DESCRIPTION OF THE DRAWINGS

FIG. 1 is a partial perspective view illustrating an example of a state in which the reinforcing tape is attached to conductor terminals of a flexible flat cable.
FIG. 2 is a chart showing an example of softening temperature measurement.

### DETAILED DESCRIPTION OF THE INVENTION

The flexible flat cable reinforcing tape according to the present invention comprises an insulating film (A), a layer of an anchor coat (B) having a thickness of 15 to 50 µm on one side of the insulating film (A) and a layer of a hot-melt adhesive (C) having a thickness of 10 to 30 µm in the order thereof.

### (A) Insulating film:

The insulating film functions to impart rigidity and strength to the reinforcing tape of the present invention, thereby allowing conductor terminals of a flexible flat cable to be joined by a connector to an electric device.

Examples of the insulating film include films made of at least one of the following resins: polyester resins such as polyethylene terephthalate resins and polyethylene naphthalate resins; polyphenylene sulfide resins; polycarbonate resins; polyolefin resins such as polypropylene resins and polyethylene resins; polyamide resins; and polystyrene resins. These films include nonoriented films, monoaxially oriented films, and biaxially oriented films. A laminated film obtained by laminating at least one of these films into two or more layers is also included. Of these, in view of rigidity, strength, and cost, a biaxially oriented film of a polyethylene terephthalate resin and a laminated film prepared by laminating such film into two or more layers are preferable.

Although thickness of the insulating film is not particularly limited, in consideration of imparting rigidity and strength, it may be generally 100 µm or more and preferably 125 µm or more. In view of workability, it may be generally 500 µm or less and preferably 250 µm or less.

The insulating film may include a colored layer made of a resin containing a colorant. The insulating film may be composed of films, any of which has at least one face processed by printing.

### (B) Anchor coat layer:

The layer (B) functions to improve adhesion strength between the insulating film and the layer of the hot-melt adhesive and increase the conductor-adhesive property.

A coating material for forming the layer of the anchor coat is not particularly limited. One preferable example is a coating material containing the following: (b1) 100 parts by mass of a thermoplastic saturated copolyester resin; and (b2) 3 to 25 parts by mass of a compound having two or more isocyanate groups per molecule.

The component (b1) is a resin to be used a base material for a coating material for forming an anchor coat. As an example of the component (b1), a thermoplastic saturated copolyester resin obtained by a known method using any polycarboxylic acid and any polyol can be employed.

Examples of the polycarboxylic acid that can be mentioned include: aromatic polycarboxylic acids such as terephthalic acid, isophthalic acid, orthophthalic acid, naphthalene dicarboxylic acid, diphenyl-4,4'-dicarboxylic acid, diphenoxyethane carboxylic acid, diphenyl-3,3'-dicarboxylic acid, diphenyl-4,4'-dicarboxylic acid, and anthracene dicarboxylic acid; cycloaliphatic dicarboxylic acids such as 1,2-cyclohexane dicarboxylic acid, 1,3-cyclohexane dicarboxylic acid, and 1,4-cyclohexane dicarboxylic acid; aliphatic polycarboxylic acids such as malonic acid, succinic acid, glutaric acid, adipic acid, pimelic acid, suberic acid, azelaic acid, and sebacic acid; and ester-forming derivatives thereof. At least one of these examples can be used as the carboxylic acid.

Examples of the polyol that can be mentioned include: aliphatic polyhydric alcohols such as ethylene glycol, diethylene glycol, trimethylene glycol, tetramethylene glycol, neopentyl glycol, polyethylene glycol, 1,2-propanediol, 1,3-propanediol, polypropylene glycol, 1,2-butanediol, 1,3-butanediol, 1,4-butanediol, 1,5-pentanediol, 1,6-hexanediol, neopentyl glycol, decamethylene glycol, 3-methyl-1,5-pentanediol, 2-methyl-1,3-propanediol, 1,2-cyclohexanediol, 1,4-cyclohexanediol, 1,4-cyclohexane dimethanol, 2,2,4,4'-tetramethyl-1,3-cyclobutane diol, glycerin, and trimethylol propane; aromatic polyols such as xylylene glycol, 4,4'-dihydroxybiphenyl, 2,2-bis(4-hydroxyphenyl)propane, bis(4-hydroxyphenyl)sulfone, bisphenol A, and alkylene oxide adducts of bisphenol A; and ester-forming derivatives thereof. At least one of these examples can be used as the polyol.

The number average molecular weight of the component (b1) is preferably 10,000 to 35,000 and more preferably 15,000 to 30,000 in view of the conductor-adhesive property and adhesiveness to a flame-retardant insulating film for flexible flat cables.

The number average molecular weight of the component (b1) is a value measured by gel permeation chromatography (GPC).

GPC measurement is carried out at a flow rate of 1.0 milliliter/min, a column temperature of 40°C, a sample concentration of 1 milligram/milliliter, and a sample injection volume of 100 microliters using, as a system, a high-performance liquid chromatography system "LC-2000Plus (trade name)" (including a degasser, a feed pump "PU-2080 (trade name)", an auto-sampler "AS-2055 (trade name)," a column oven, and an RI (differential refractive index) detector) by JASCO Corporation, as a column, two styrene divinylbenzene copolymer packed columns "Shodex GPC K-806L (trade name)" by Showa Denko Corporation, which are joined in series, and, as a mobile phase, chloroform for high-performance liquid chromatography (including ethanol as a stabilizer) by Wako Pure Chemical Industries, Ltd.

The elution amount at each retention volume is obtained from the amount detected by the RI detector, provided that there is no molecular weight dependence of the refractive index of the component (b1).

In addition, a calibration curve for converting the retention volume to the polystyrene-equivalent molecular weight is created using standard polystyrene "EasiCal PS-1 (trade name)" (Plain A molecular weight: 6870000, 841700, 152800, 28770, 2930; Plain B molecular weight: 2348000, 327300, 74800, 10110, 580) by Agilent Technology.

"ChromNAV GPC (trade name)" by JASCO Corporation is used as an analysis program.

For the GPC theory and measurement in practice, *"Size haijo chromatography* - *Kobunshi no kosoku ekitai chromatography* (Size exclusion chromatography - High-performance liquid chromatography of polymer)" (author: Sadao Mori, the first impression of the first edition, December 10, 1991, Kyoritsu Shuppan Co., Ltd.) can be referred to.

The component (b1) may be a crystalline or non-crystalline component. In consideration of preventing troubles such as a peeling of a reinforcing tape from a conductor, it may be a non-crystalline component.

It is specified herein that a polyester with a melting calorie of 10 J/g or less is a non-crystalline polyester and a polyester with a melting calorie of more than 10 J/g is a crystalline polyester based on a second melting curve measured by a temperature program comprising steps of heating a sample to 200°C at a temperature increasing rate of 50°C/min, retaining the sample at 200°C for 10 min, cooling the sample to 50°C at a temperature decreasing rate of 20°C/min, retaining the sample at 50°C for 10 min, and heating the sample to 200°C at a temperature increasing rate of 20°C/min (i.e., a melting curve measured in the last temperature increasing step) using a Diamond DSC differential scanning calorimeter by PerkinElmer Japan.

The component (b2) has two or more isocyanate groups per molecule and functions to impart the elastic body properties to the anchor coat layer and improve the adhesiveness of the conductor-adhesive property of the reinforcing tape of the present invention.

Examples of the component (b2) include the following urethane crosslinking agents: methylenebis-4-cyclohexyl isocyanate; polyisocyanates such as tolylene diisocyanate in the trimethylolpropane adduct form, hexamethylene diisocyanate in the trimethylolpropane adduct form, isophorone diisocyanate in the trimethylolpropane adduct form, tolylene diisocyanate in the isocyanurate form, hexamethylene diisocyanate in the isocyanurate form, isophorone diisocyanate in the isocyanurate form, and hexamethylene diisocyanate in the biuret form; and blocked isocyanates of these polyisocyanates. One of these examples or a mixture of two or more thereof can be used as the component (b2).

The amount of the component (b2) to be added is preferably 3 to 25 parts by mass, more preferably 10 to 23 parts by mass, further preferably 14 to 20 parts by mass with respect to 100 parts by mass of the component (b1) in view of the conductor-adhesive property.

The above-mentioned coating material for forming the anchor coat may contain, if desired, a solvent to dilute the coating material to a concentration that facilitates coating. The solvent is not particularly limited as long as it does not react with the components (b1) and (b2) and other optional ingredients or it does not catalyze (promote) self-reaction of these components (including degradation reaction). Examples that can be mentioned include 1-methoxy-2-propanol, ethyl acetate, n-butyl acetate, toluene, methyl ethyl ketone, methyl isobutyl ketone, diacetone alcohol, and acetone.

The coating material for forming the anchor coat may contain, if desired, one kind of or two or more kinds of additives such as antistatic agents, surfactants, leveling agents, thixotropic agents, antifouling agents, printability improving agents, antioxidants, weathering stabilizers, light resistance stabilizers, ultraviolet absorbers, thermal stabilizers, colorants, and fillers.

The coating material for forming the anchor coat can be obtained by mixing and stirring these components.

A method of forming the layer (B) using the coating material for forming the anchor coat is not particularly limited. It is possible to use a known web coating method. Specific examples that can be mentioned include roll coating, gravure coating, reverse coating, roll brushing, spray coating, air knife coating, and die coating.

The thickness of the layer of the anchor coat (B) is to 50 µm, preferably 15 to 40 µm, and more preferably 15 to 30 µm in view of the conductor-adhesive property.

### (C) Layer of hot melt adhesive:

The layer (C) functions to directly ensure the conductor-adhesive property.

Examples of the hot melt adhesive that can be mentioned include polyester, ethylene vinyl acetate, polyurethane, polyamide, polystyrene, and polyolefin adhesives. Of these, polyester adhesives are preferable, thermoplastic saturated copolyester adhesives are more preferable, and crystalline thermoplastic saturated copolyester adhesives having melting points of 100°C to 150°C are further preferable.

The melting point defined herein corresponds to the peak top temperature of the highest-temperature-side peak that appears on a second melting curve measured by a temperature program comprising steps of heating a sample to 200°C at a temperature increasing rate of 50°C/min, retaining the sample at 200°C for 10 min, cooling the sample to 50°C at a temperature decreasing rate of 20°C/min, retaining the sample at 50°C for 10 min, and heating the sample to 200°C at a temperature increasing rate of 20°C/min (i.e., a melting curve measured in the last temperature increasing step) using a Diamond DSC differential scanning calorimeter by PerkinElmer Japan. In addition, it is specified herein that a polyester with a melting calorie of 10 J/g or less is a non-crystalline polyester and a polyester with a melting calorie of more than 10 J/g is a crystalline polyester based on the second melting curve.

A method of forming the layer of the hot-melt adhesive is not particularly limited. Examples that can be mentioned include: a method of melt extrusion using a system equipped with an extruder, T-die, and a pull-type winder; a method of forming a coating film on a desired web substrate by applying a hot-melt adhesive dissolved in a solvent such as 1-methoxy-2-propanol, ethyl acetate, n-butyl acetate, toluene, methyl ethyl ketone, methyl isobutyl ketone, diacetone alcohol, or acetone by a known method of web coating, for example, roll coating, gravure coating, reverse coating, roll brushing, spray coating, air knife coating, or die coating.

The thickness of the layer of the hot melt adhesive is 10 to 30 µm and preferably 15 to 20 µm in view of the conductor-adhesive property.

The softening temperature of the reinforcing tape of the present invention is preferably 95°C or higher and more preferably 100°C or higher in view of the conductor-adhesive property.

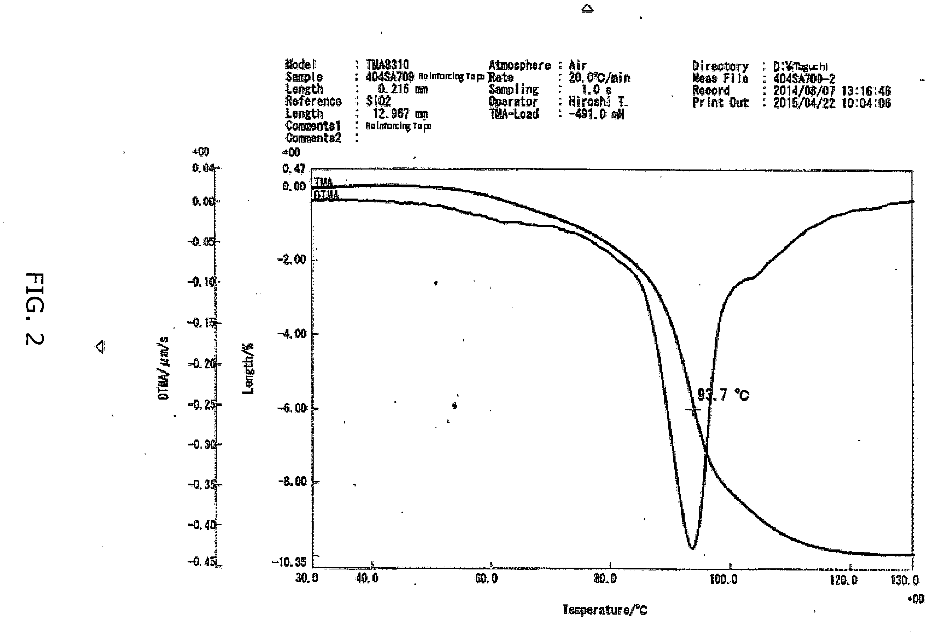

The above softening temperature specified herein is a temperature with a maximum absolute value of the penetration depth variation rate on a temperature-penetration depth curve when an indenter is allowed to penetrate from the side of the layer (C) of the reinforcing tape using a thermomechanical measuring apparatus. The softening temperature was obtained as the peak top temperature of a curve calculated by differentiating a temperature-penetration depth curve obtained by heating a sample cut into a circle having a diameter of 5 mm from 30°C to 150°C at a temperature increasing rate of 20°C/min with a load of 491 mN using a thermomechanical measuring apparatus "TMA8310 (trade name)" by Rigaku in accordance with JIS K7196-1991 except for using, as an indenter, a conical pin for penetration (PN/P1X07R) of Rigaku Corporation. FIG. 2 shows a measurement example.

While not intending to be bound by theory, the configuration of the present invention allows preventing troubles such as a peeling of the reinforcing tape from a conductor. This is considered because the thick anchor coat functions as a cushion during molding so that the hot-melt adhesive does not flow out from the area surrounding the conductor.

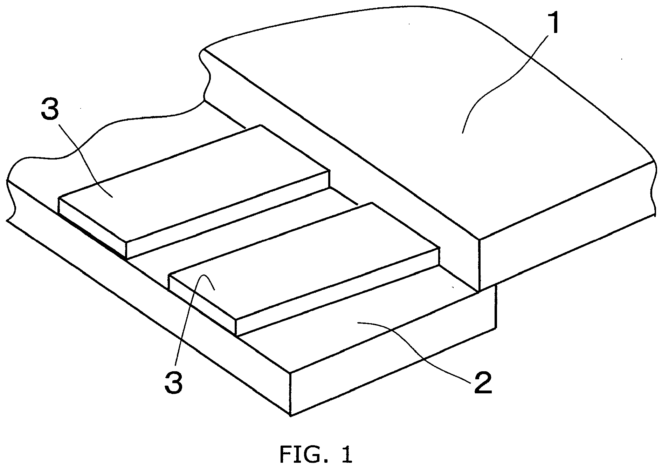

A method of obtaining the flexible flat cable of the present invention is not particularly limited, and thus, it can be obtained by known methods. Examples of the method include the following method. For example, two rolls of a known flame-retardant insulating film for flexible flat cables, on one face of which a layer of a flame-retardant hot-melt adhesive has been formed, are used. The rolls of the film are fed using a known flexible flat cable manufacturing apparatus so that the layer of the hot-melt adhesive of one of the rolls face that of the other roll. Rectangular conductor wire pull-aligned in parallel is sandwiched therebetween and heat-pressed by a heat-press roll of the apparatus so that the layers of the hot-melt adhesive are fused with each other. The flame-retardant insulating film is perforated and the reinforcing tape of the present invention is applied to the perforated site from the insulating film layer side before the rectangular conductor wire is sandwiched. Then, both side edges of the fused product are slit to result in a predetermined finishing width and cut at the perforated site where the reinforcing tape of the present invention has been applied. Thus, the flexible flat cable of the present invention can be completed. FIG. 1 is a partial perspective view showing an example of the flexible flat cable.

Although the rectangular conductor wire is not particularly limited, it may be annealed copper wire, hard drawn copper wire, or tin-plated wire or nickel-plated wire thereof with a thickness of 12 to 50 µm and a width of 0.2 to 2 mm in view of slidability of the cable.

### EXAMPLES

Hereinafter, the present invention is described with reference to Examples, but the present invention is not limited thereto.

### Methods for measurement

### (I) Conductor-adhesion force 1 (no treatment):

### (I-1) Production of flexible flat cable:

A flexible flat cable 100 mm in length and 24 mm in width was obtained using a flexible flat cable apparatus with two rolls of a flame-retardant insulating film for flexible flat cables "NC5224 (trade name)" by Riken Technos Co., Ltd. Twelve hard drawn copper wires 1.4 mm in conductor width and 0.035 mm in thickness arranged in parallel were sandwiched between the hot-melt adhesive layer of one roll of the flame-retardant insulating film and the hot-melt adhesive layer of the other roll of the flame-retardant insulating film and pressed between a press roll preheated to 180°C and a receiving roll preheated to 180°C at a line speed of 0.5 m/min and a pressure of 3 MPa so as to be fused each other. Thereafter, both side ends of the fused product were slit to result in a finished width of 24 mm. The obtained product was cut along the center line of the perforated site where the reinforcing tape had been applied in the machine direction. Note that the flame-retardant insulating film was preliminarily perforated so that holes each having a size of 20 mm in the machine direction × 24 mm in the transverse direction were made at 100-mm intervals, and the reinforcing tape cut into a length of 150 mm was applied from the insulating film layer side.

### (I-2)

Adhesion force of the reinforcing tape of the flexible flat cable obtained above to the copper wire was measured by performing 180-degree peel of the copper wire from the reinforcing tape under the conditions of a test speed of 50 mm/min.

### (II) Conductor-adhesion force 2 (conductor-adhesion force after acid immersion):

The reinforcing tape portion of the flexible flat cable obtained in (I-1) above was immersed in a 5% by mass hydrochloric acid aqueous solution for 2 hours at 60°C and then measurement was conducted in the same manner as in (1-2) above.

### (III) Conductor-adhesion force 3 (conductor-adhesion force after immersion in alkali):

The reinforcing tape portion of the flexible flat cable obtained in (I-1) above was immersed in a 5% by mass sodium hydroxide aqueous solution for 2 hours at 60°C and then measurement was conducted in the same manner as in (1-2) above.

### (IV) Conductor- adhesion force 4 (conductor- adhesion force after immersion in salt water):

The reinforcing tape portion of the flexible flat cable obtained in (I-1) above was immersed in a 5% by mass sodium chloride aqueous solution for 2 hours at 60°C and then measurement was conducted in the same manner as in (1-2) above.

### (V) Conductor- adhesion force 5 (conductor- adhesion force after immersion in gold plating treatment liquid):

The reinforcing tape portion of the flexible flat cable obtained in (I-1) above was immersed in a gold plating treatment liquid (mixed aqueous solution of gold potassium cyanide for the terminal gold-plated of flexible flat cable, potassium cyanide, potassium hydrogen phosphate, and potassium carbonate, pH 11) for gold-plating terminals of the flexible flat cable for 2 hours at 60°C and then measurement was conducted in the same manner as in (1-2) above.

### (VI) Conductor- adhesion force 6 (conductor- adhesion force after immersion in gold plating treatment liquid 2):

The conductor- adhesion force after immersion in gold plating treatment liquid was measured for each pair of copper wires for 100 cables (200 data in total) in the same manner as in (V) above. The number of data showing an adhesion force of equal to or less than 1.5 N/14 mm were counted and the results were evaluated by the following criteria.
○○: 0
○: 1 datum to 4 data
Δ: 5 to 10 data
×: 11 data or more

### Raw materials used

### (A) Insulating film:

(A-1) Biaxially oriented polyethylene terephthalate-based resin film with a thickness of 188 µm treated to have one highly adherent side.

### (B) Coating material for anchor coat:

(B-1) Coating material obtained by mixing and stirring the following: (b1) 100 parts by mass; (b2) 17 parts by mass; (b3) 33 parts by mass; and (b4) 230 parts by mass.
(B-2) Coating material obtained by mixing and stirring the following: (b1) 100 parts by mass; (b2) 12 parts by mass; (b3) 33 parts by mass; and (b4) 230 parts by mass.
(b1) Non-crystalline thermoplastic saturated copolymer polyester-based resin "Vylon 500 (trade name)" with a molecular weight of 23000 and a glass transition temperature of 4°C by Toyobo Co., Ltd.
(b2) Polyisocyanurate "Coronate HX (trade name)" by Tosoh Corporation.
(b3) Ink "NB500 739 Ai (trade name)" by Dainichiseika Color & Chemicals Mfg. Co., Ltd.
(b4) Toluene

### (C) Hot-melt adhesive:

(C-1) Crystalline thermoplastic saturated copolymer polyester-based resin "Aron Melt PES-111EE (trade name)" by Toagosei Co., Ltd.

### (D) Separator film:

(D-1) Biaxially oriented polypropylene-based resin film with a thickness of 12 µm.

### Example 1

A layer of the anchor coat was formed with the above (B-1) on the highly adherent side of the above (A-1) using a roll coater so that the thickness of the layer became 15 µm after drying. The above (C-1) was laminated by extrusion on (D-1) described below, thereby obtaining a film-like hot melt adhesive having a thickness of 15 µm. The (C-1) side of the laminated body of (C-1) and (D-1) obtained above was laid on the (B-1) side of the laminated body of (A-1) and (B-1) obtained above, followed by thermal lamination. The thus obtained laminated body was slit to result in a width of 25 mm, thereby obtaining a reinforcing tape. The above tests (I) to (V) were carried out. The results are shown in Table 1.

### Examples 2-4, Examples 1C and 2C

Examples 2-4 and Examples 1C and 2C were carried out in the same manner as in Example 1 except that the thickness of the layer (B) and the thickness of the layer (C) were changed as shown in Table 1. The results are shown in Table 1.

### Example 5

Example 5 was carried out in the same manner as in Example 1 except that the above (B-2) was used instead of the above (B-1). The results are shown in Table 1 Example 3 is a comparative example.

**[Table 1]**

| | | Example 1 | Example 1C | Example 2 | Example 3 | Example 4 | Example 5 | Example 2C |
|---|---|---|---|---|---|---|---|---|
| Configuration | Coating material for B layer formation | B-1 | B-1 | B-1 | B-1 | B-1 | B-2 | B-1 |
| | B layer thickness (µm) | 15 | 3 | 20 | 10 | 30 | 15 | 20 |
| | C layer thickness (µm) | 15 | 30 | 20 | 15 | 15 | 15 | 5 |
| Evaluation results | Conductor-adhesion force: 1N/14mm | 3.0 | 2.7 | 3.1 | 2.8 | 3.2 | 2.7 | 2.0 |
| | Conductor- adhesion force: 2N/14mm | 2.8 | 2.5 | 2.8 | 2.7 | 2.8 | 2.5 | 1.0 |
| | Conductor- adhesion force: 3N/14mm | 2.5 | 2.2 | 2.5 | 2.3 | 2.5 | 2.2 | 0.2 |
| | Conductor- adhesion force: 4N/14mm | 3.0 | 2.7 | 3.0 | 2.7 | 3.2 | 2.7 | 1.0 |
| | Conductor- adhesion force: 5N/14mm | 3.0 | 2.6 | 3.0 | 2.9 | 3.2 | 2.6 | 1.8 |
| | Conductor- adhesion force: 6 | ○○ | Δ | ○○ | ○ | ○○ | ○ | × |
| | Softening temperature °C | 103 | 94 | 101 | 100 | 108 | 75 | 110 |

The reinforcing tape of the present invention has an excellent conductor-adhesive property and can prevent troubles such as a peeling from a conductor when terminals of the conductor are processed by gold plating or the like.

### [Description of Symbols]

1: Flexible flat cable
2: Reinforcing tape
3: Conductor terminal

## Claims

1. A flexible flat cable reinforcing tape comprising:
an insulating film (A);
a layer of an anchor coat (B) having a thickness of 15 to 50 µm on one side of the insulating film (A); and
a layer of a hot-melt adhesive (C) having a thickness of 10 to 30 µm in the order thereof.

2. The reinforcing tape according to claim 1, wherein the layer of the anchor coat (B) has a thickness of 15 to 40 µm.

3. The reinforcing tape according to claim 1, wherein the layer of the anchor coat (B) has a thickness of 15 to 30 µm.

4. The reinforcing tape according to any one of claims 1 to 3, wherein the layer of the anchor coat (B) is formed of a coating material comprising:
(b1) 100 parts by mass of a thermoplastic saturated copolyester resin; and
(b2) 3 to 25 parts by mass of a compound having two or more isocyanate groups per molecule.

5. The reinforcing tape according to claim 4, wherein the amount of the compound having two or more isocyanate groups per molecule (b2) is 10 to 23 parts by mass with respect to 100 parts by mass of the component (b1).

6. The reinforcing tape according to claim 4, wherein the amount of the compound having two or more isocyanate groups per molecule (b2) is 14 to 20 parts by mass with respect to 100 parts by mass of the component (b1).

7. The reinforcing tape according to any one of claims 4 to 6, wherein the thermoplastic saturated copolyester resin (b1) is non-crystalline component.

8. The reinforcing tape according to any one of claims 1 to 7, wherein the hot melt adhesive is a thermoplastic saturated copolyester adhesive.

9. The reinforcing tape according to any one of claims 1 to 8, wherein the reinforcing tape has a softening temperature of 95°C or higher.

10. A flexible flat cable comprising the reinforcing tape according to any one of claims 1 to 9.

11. A flexible flat cable comprising terminals of a conductor, the terminals of the conductor being reinforced by the reinforcing tape according to any one of claims 1 to 9.

12. A method for reinforcing terminals of a conductor of a flexible flat cable comprising using the reinforcing tape according to any one of claims 1 to 9.

## Patentansprüche

1. Flexibles Flachkabel-Verstärkungsband, umfassend:
eine isolierende Folie (A);
eine Schicht einer Verankerungsbeschichtung (B) mit einer Dicke von 15 bis 50 µm auf einer Seite der isolierenden Folie (A); und
eine Schicht aus einem Schmelzklebstoff (C) mit einer Dicke von 10 bis 30 µm in dieser Reihenfolge.

2. Verstärkungsband nach Anspruch 1, wobei die Schicht der Verankerungsbeschichtung (B) eine Dicke von 15 bis 40 µm aufweist.

3. Verstärkungsband nach Anspruch 1, wobei die Schicht der Verankerungsbeschichtung (B) eine Dicke von 15 bis 30 µm aufweist.

4. Verstärkungsband nach einem der Ansprüche 1 bis 3, wobei die Schicht der Verankerungsbeschichtung (B) aus einem Beschichtungsmaterial gebildet ist, umfassend:
(b1) 100 Massenteile eines thermoplastischen gesättigten Copolyesterharzes; und
(b2) 3 bis 25 Massenteile einer Verbindung mit zwei oder mehr Isocyanatgruppen pro Molekül.

5. Verstärkungsband nach Anspruch 4, wobei die Menge der Verbindung mit zwei oder mehr Isocyanatgruppen pro Molekül (b2) 10 bis 23 Massenteile, bezogen auf 100 Massenteile der Komponente (b1), beträgt.

6. Verstärkungsband nach Anspruch 4, wobei die Menge der Verbindung mit zwei oder mehr Isocyanatgruppen pro Molekül (b2) 14 bis 20 Massenteile, bezogen auf 100 Massenteile der Komponente (b1), beträgt.

7. Verstärkungsband nach einem der Ansprüche 4 bis 6, wobei das thermoplastische gesättigte Copolyesterharz (b1) eine nichtkristalline Komponente ist.

8. Verstärkungsband nach einem der Ansprüche 1 bis 7, wobei der Schmelzklebstoff ein thermoplastischer gesättigter Copolyesterklebstoff ist.

9. Verstärkungsband nach einem der Ansprüche 1 bis 8, wobei das Verstärkungsband eine Erweichungstemperatur von 95°C oder höher aufweist.

10. Flexibles Flachkabel, umfassend das Verstärkungsband nach einem der Ansprüche 1 bis 9.

11. Flexibles Flachkabel mit Anschlüssen eines Leiters, wobei die Anschlüsse des Leiters durch das Verstärkungsband nach einem der Ansprüche 1 bis 9 verstärkt sind.

12. Verfahren zur Verstärkung von Anschlüssen eines Leiters eines flexiblen Flachkabels, bei dem das Verstärkungsband nach einem der Ansprüche 1 bis 9 verwendet wird.

## Revendications

1. Bande de renforcement de câble plat flexible comprenant :
un film isolant (A) ;
une couche d'un revêtement d'ancrage (B) ayant une épaisseur de 15 à 50 µm sur un côté du film isolant (A) ; et
une couche d'un adhésif thermofusible (C) ayant une épaisseur de 10 à 30 µm dans cet ordre.

2. Bande de renforcement selon la revendication 1, dans laquelle la couche du revêtement d'ancrage (B) possède une épaisseur de 15 à 40 µm.

3. Bande de renforcement selon la revendication 1, dans laquelle la couche du revêtement d'ancrage (B) possède une épaisseur de 15 à 30 µm.

4. Bande de renforcement selon l'une quelconque des revendications 1 à 3, dans laquelle la couche du revêtement d'ancrage (B) est formée d'un matériau de revêtement comprenant :
(b1) 100 parties en masse d'une résine à copolyester saturé thermoplastique ; et
(b2) de 3 à 25 parties en masse d'un composé ayant deux groupes isocyanate ou plus par molécule.

5. Bande de renforcement selon la revendication 4, dans laquelle la quantité du composé ayant deux groupes isocyanate ou plus par molécule (b2) est de 10 à 23 parties en masse par rapport à 100 parties en masse du constituant (b1).

6. Bande de renforcement selon la revendication 4, dans laquelle la quantité du composé ayant deux groupes isocyanate ou plus par molécule (b2) est de 14 à 20 parties en masse par rapport à 100 parties en masse du constituant (b1).

7. Bande de renforcement selon l'une quelconque des revendications 4 à 6, dans laquelle la résine à copolyester saturé thermoplastique (b1) est un constituant non cristallin.

8. Bande de renforcement selon l'une quelconque des revendications 1 à 7, dans laquelle l'adhésif thermofusible est un adhésif à copolyester saturé thermoplastique.

9. Bande de renforcement selon l'une quelconque des revendications 1 à 8, dans laquelle la bande de renforcement possède une température de ramollissement de 95 °C ou supérieure.

10. Câble plat flexible comprenant la bande de renforcement selon l'une quelconque des revendications 1 à 9.

11. Câble plat flexible comprenant des bornes d'un conducteur, les bornes du conducteur étant renforcées par la bande de renforcement selon l'une quelconque des revendications 1 à 9.

12. Méthode de renforcement de bornes d'un conducteur d'un câble plat flexible comprenant l'utilisation de la bande de renforcement selon l'une quelconque des revendications 1 à 9.
